Europäisches Patentamt

European Patent Office

Office européen des brevets

(11) Veröffentlichungsnummer: **0 191 202**
**B1**

(12) **EUROPÄISCHE PATENTSCHRIFT**

(45) Veröffentlichungstag der Patentschrift: **04.04.90**

(21) Anmeldenummer: **85202113.8**

(22) Anmeldetag: **19.12.85**

(51) Int. Cl.⁵: **C 03 B 37/018,** G 02 B 6/10

(54) **Lichtleitfaser mit Fluordotierung und Verfahren zu deren Herstellung.**

(30) Priorität: **11.01.85 DE 3500672**

(43) Veröffentlichungstag der Anmeldung:
**20.08.86 Patentblatt 86/34**

(45) Bekanntmachung des Hinweises auf die
Patenterteilung:
**04.04.90 Patentblatt 90/14**

(84) Benannte Vertragsstaaten:
**DE FR GB IT NL SE**

(56) Entgegenhaltungen:
**EP-A-0 127 227**
**GB-A-2 046 239**
**GB-A-2 100 464**
**GB-A-2 129 152**

**100 ACTA FREQUENZA, Band 52, Nr. 2, März-April 1983, Seiten 98-102, Mailand, IT; E. ODONE et al.: "Very low-loss highly reproducible optical fibres by a pressurized M.C.V.D. method"**

(73) Patentinhaber: **Philips Patentverwaltung GmbH Wendenstrasse 35 Postfach 10 51 49 D-2000 Hamburg 1 (DE)**
㊴ **DE**

(73) Patentinhaber: **N.V. Philips' Gloeilampenfabrieken Groenewoudseweg 1 NL-5621 BA Eindhoven (NL)**
㊴ **FR GB IT NL**

(72) Erfinder: **Bachmann, Peter, Dr. Karlstrasse 55 D-5100 Aachen (DE)**
Erfinder: **Geittner, Peter, Dr. Ronheider Weg 26 D-5100 Aachen (DE)**
Erfinder: **Leers, Dieter Wolferskaul 21 D-5100 Aachen (DE)**
Erfinder: **Wilson, Howard Königsberger Strasse 32 D-5100 Aachen (DE)**

(74) Vertreter: **Piegler, Harald, Dipl.-Chem. et al Philips Patentverwaltung GmbH Wendenstrasse 35 Postfach 10 51 49 D-2000 Hamburg 1 (DE)**

**Beschreibung**

Die Erfindung betrifft eine Lichtleitfaser auf der Basis von Siliziumdioxid mit einer deren Brechnungsindexprofil zumindest im optischen Leitungsbereich bestimmenden Fluordotierung.

Ferner betrifft die Erfindung ein Verfahren zur Herstellung einer derartigen Lichtleitfaser, bei dem durch reaktive Abscheidung von Siliziumdioxid und Fluor aus einem Reaktionsgasgemisch eine Vorform erzeugt wird, die zur Lichtleitfaser weiterverarbeitet wird. Die Weiterverarbeitung der Vorform zur Lichtleitfaser erfolgt meist durch Kollabieren und/oder Ziehen.

Lichtleitfasern der zuvor genannten Art sind aus der DE—A—3 205 345 bekannt. Daneben sind Lichtleitfasern mit Fluordotierung bekannt, bei denen das Brechungsindexprofil nicht durch die Fluordotierung, sondern durch andere Substanzen bestimmt wird, während durch die Fluordotierung z.B. unerwünschte Brechungsindexschwankungen beseitigt werden (DE—A—3 031 147) oder eine niedrige OH-Absorption erreicht wird (DE—A—3 318 589).

Ferner ist es aus der DE—B—2 715 333 bekannt, die thermischen Ausdehnungskoeffizienten von Kern und Mantel einer Lichtleitfaser-Vorform durch Zusätze aneinander anzugleichen, um eine Rißbildung zu vermeiden.

Als Herstellungsverfahren der eingangs genannten Art sind u.a. die thermischen Abscheidungsverfahren OVPO, MCVD und VAD sowie das PCVD-Verfahren bekannt; vgl. DE—A—3 205 345.

Die ausschließliche Verwendung fluorhaltiger Verbindungen als Dotierungsmittel zur Einstellung des Brechungsindexprofils bietet die Möglichkeit der Herstellung von Lichtleitfasern mit Profilstrukturen, deren Zentralbereich weitgehend aus reinem $SiO_2$ bestehen kann. Besonders vorteilhaft sind dabei das Vermeiden kollabierbedingter Profilstörungen (zentraler 'Dips'), die—im Vergleich zu anderen Dotierungssystemen—niedrigen intrinsischen Streuverluste von $SiO_2$, die günstigen materialdispersiven Eigenschaften dieses Systems für Monomodeanwendungen und die vergleichsweise niedrigen Kosten für die fluorhaltigen Ausgangssubstanzen. Darüber hinaus lassen sich spezielle Profilstrukturen, z.B. "vollständig abgesenkte" ("fully depressed") Monomode-Strukturen (in denen die Brechungsindexverteilungen des lichtleitenden Bereichs unter dem Brechungsindex von $SiO_2$ liegen) und Multimode-Strukturen mit hoher numerischer Apertur, besonders einfach realisieren. Bei den Untersuchungen, die zur Erfindung geführt haben, zeigte sich jedoch, daß in folgenden Teilbereichen vorteilhafte optische Eigenschaften nur mit Einschränkungen erzielt werden konnten:

1. Die materialintrinsischen Rayleigh-Streuverluste von reinem $SiO_2$ wurden auch bei Lichtleitfasern mit günstigen Profilstrukturen ($SiO_2$ im Kern, Fluor/$SiO_2$ im Mantel) experimentell nicht erreicht.

2. Bei rein fluordotierten Lichtleitfasern wurde eine—im Vergleich zu anderen Dotierungssystemen—deutliche Abhängigkeit der optischen Verluste von den Ziehbedingungen festgestellt. Rayleigh-Streuung und wellenlängenunabhängige Streuverluste ('c-Term') hängen dabei beide insbesondere von der Ziehkraft ab, mit der die Faser aus der Vorform gezogen wird: Hohe Ziehkräfte führen zu niedrigen c-Termen und erhöhten Rayleigh-Streuverlusten, niedrige Ziehkräfte dagegen in der Regel zu erhöhten c-Termen bei gleichzeitig niedrigen Rayleigh-Termen. Dieses Verhalten ist für eine absolute Optimierung des Ziehprozesses problematisch; darüber hinaus sind die relativ 'optimalen Ziehbedingungen' für das reine Fluordotierungssystem deutlich von denen anderer Dotierungssysteme (z.B. $GeO_2$) verschieden.

3. Es wurde experimentell gefunden, daß die Erhöhung des Anteils fluorhaltiger Verbindungen im Reaktionsgasgemisch auf Konzentrationen von mehr als 2 bis 3 mol% (bezogen auf die Chlorid-Gasanteile) nicht zu einer weiter reduzierten OH-Absorption führt; für hohe Fluor-Dotierungskonzentrationen (maximale Brechungsindexunterschiede zwischen Kern und Mantel größer als typischerweise $\Delta n \sim 1{,}5 \cdot 10^{-2}$) wurden sogar teilweise höhere OH-Absorptionsverluste, d.h. Absorptionsverluste durch OH-Verunreinigungen, als in Fasern mit niedrigen Fluordotierungskonzentrationen beobachtet.

4. Trotz der in etwa vergleichbaren thermischen Ausdehnungskoeffizienten von reinem $SiO_2$ und fluordotiertem $SiO_2$ traten im Mantel der kollabierten Vorform in verstärktem Maße Risse auf.

Aufgabe der Erfindung ist es, Maßnahmen anzugeben, mit denen die Eigenschaften fluordotierter Lichtleitfasern in den o.a. Teilbereichen weiter verbessert werden. Die Anwendung derartiger Maßnahmen soll insbesondere den Einfluß der Ziehbedingungen auf die optischen Eigenschaften (Rayleigh-Streuung und wellenlängenunabhängige 'c-Term'-Verluste) reduzieren, die Herstellung fluordotierter Lichtleitfasern mit Rayleigh-Streuverlusten im Bereich der materialintrinsischen Grenzen für reines $SiO_2$ bei gleichzeitig niedrigen c-Term-Verlusten ermöglichen und—für hohe Fluor-Dotierungskonzentrationen—weiter verringerte OH-Absorptionsverluste bewirken. Gleichzeitig sollen jedoch die Vorteile der Fluordotierung in bezug auf sämtliche weitere optische Eigenschaften in vollem Umfang erhalten bleiben.

Diese Aufgabe wird erfindungsgemäß dadurch gelöst, daß eine Lichtleitfaser der eingangs genannten Art einen Gehalt an mindestens einer den thermischen Ausdehnungskoeffizienten erhöhenden Substanz, die zumindest im optischen Leitungsbereich der Lichtleitfaser gleichmäßig verteilt ist, aufweist.

Die Erfindung besteht somit darin, daß eine Lichtleitfaser der eingangs genannten Art neben der—hauptsächlich den Berechungsindex bestimmenden—Fluordotierung eine zumindest im lichtleitenden Bereich der Faser gleichmäßig verteilte Codotierung mit mindestens einer weiteren, den thermischen Ausdehnungskoeffizienten erhöhenden Substanz aufweist.

Zur Herstellung der erfindungsgemäßen Lichtleitfaser wird vorzugsweise ein Verfahren der eingangs genannten Art angewendet, bei dem dem Reaktionsgasgemisch zumindest während der Abscheidung des optischen Leitungsbereichs eine gleichbleibende Menge mindestens einer reaktiven Zusatzsubstanz beigefügt wird, deren Reaktionsprodukt den thermischen Ausdehnungskoeffizienten des abgeschiedenen Materials erhöht.

Wesentlichstes Kriterium für die Auswahl geeigneter Codotierungssysteme und notwendiger Konzentrationen in der reaktiven Gasphase ist die Bedingung, daß der thermische Ausdehnungskoeffizient des abgeschiedenen Materials in der endgültigen, kompaktierten Vorform größer als der des umgebenden Mantelmaterials sein muß

$$\left( \begin{matrix} \text{Abscheidung} \\ \alpha\ \text{therm} \end{matrix} \quad \begin{matrix} \text{Mantel} \\ >\alpha\text{therm} \end{matrix} \right).$$

Dies entspricht der Forderung nach einer Druckspannung im Mantel der kollabierten Vorform; die Erfüllung dieser Voraussetzung kann dabie in einfacher Weise anhand der polarisationsoptisch gemessenen Spannungsverhältnisse in der jeweiligen Vorform kontrolliert werden.

Als Reaktionsprodukte der reaktiven Zusatzsubstanzen kommen z.B. Phosphorpentoxid oder Germaniumdioxid in Betracht. Vorzugsweise wird allerdings Germaniumdioxid verwendet, d.h. dem Reaktionsgasgemisch wird Germaniumtetrachlorid zugesetzt. Diese Zusatzsubstanz hat den Vorteil, daß keine negative Beeinflussung der optischen Eigenschaften auftritt; insbesondere entstehen keine zusätzlichen Verluste infolge IR-Absorption im Bereich von 1,3 bis 1,6 μm.

Der Gehalt an Reaktionsprodukt der Zusatzsubstanz beträgt vorzugsweise 0,5 bis 3,0 mol%, d.h. der Gehalt an Zusatzsubstanz in der reaktiven Gasphase wird so gewählt, daß die Konzentration des Reaktionsprodukts im abgeschiedenen Material vorzugsweise 0,5 bis 3,0 mol% beträgt. Unterhalb dieses Bereichs ist die gewünschte Änderung des thermischen Ausdehnungskoeffizienten in den meisten Fällen noch nicht ausreichend hoch, während oberhalb dieses Bereichs die mit der Codotierungskonzentration ansteigenden intrinsischen Rayleigh-Streuverluste die optischen Eigenschaften der Lichtleitfasern in manchen Fällen bereits deutlich negativ beeinflussen.

Bei der reaktiven Abscheidung wird vorzugsweise das PCVD-Verfahren angewendet, d.h. es werden direkt kompakte Glasschichten ohne Sintern erzeugt. Das PCVD-Verfahren erlaubt nämlich in besonders effizienter und einfacher Weise sowohl die Abscheidung von reinem $SiO_2$ als auch die Herstellung von Profilstrukturen mit hohen optischen Brechungsindexdifferenzen ($>2 \cdot 10^{-2}$) durch eine reine Fluordotierung. Bei den thermischen Abscheidungsverfahren OVPO, MCVD und VAD treten in diesem Fall aufgrund der notwendigen hohen Sintertemperaturen für reines $SiO_2$ und der bei hohen Fluorkonzentrationen infolge Ätzreaktionen massiv verringerten Prozeßausbeuten prinzipielle Probleme auf.

Der positive Einfluß auf die optischen Eigenschaften—insbesondere von Lichtleitfasern mit hoher Fluordotierung—wird durch die Erfindung unabhängig von der speziellen Profilstruktur, d.h. für Monomoden- und Gradienten-Multimodefasern gleichermaßen, erreicht.

Die Erfindung wird—insbesondere im Hinblick auf eine Verringerung der Rayleigh-Streuverluste und der Abhängigkeit der optischen Eigenschaften von den Ziehbedingungen sowie auf die OH-Absorptionsverluste—im folgenden anhand einer Zeichnung und einiger Ausführungsbeispiele näher erläutert. In der Zeichnung zeigen

Fig. 1 eine graphische Darstellung der Abhängigkeit der Rayleigh-Streuverluste und der wellenlängenunabhängigen Streuverluste von der Ziehkraft, ·

Fig. 2 eine graphische Darstellung der Abhängigkeit des Einbaus von OH-Verunreinigungen von der Brechungsindexdifferenz,

Fig. 3 schematisch das Brechungsindexprofil Δn einer fluordotierten Monomodefaser ohne Codotierung über deren Radius r,

Fig. 4 schematisch das Brechungsindexprofil Δn einer fluordotierten Monomodefaser mit $GeO_2$-Codotierung über deren Radius r und

Fig. 5 die Dämpfungsspektren zweier unter gleichen Ziehbedingungen ausgezogener Monomodefasern mit unterschiedlichen Materialzusammensetzungen entsprechend Fig. 3 und 4.

Für das Dotierungssystem $GeO_2/SiO_2$ liegen umfangreiche Daten bezüglich der materialintrinsischen optischen Verluste—insbesondere über die Abhängigkeit von der Dotierungskonzentration und den möglichen Einfluß von Ziehbedingungen — vor. Typische Werte für den Rayleigh-Streuverlustterm $\alpha_R$ in unterschiedlichen Fasertypen sind: $\alpha_R \approx 0,9$ bis 1,0 dB μm$^4$/km (Monomode-Faser, $\Delta_{co} \approx 0,3\%$) $\alpha_R \approx 1,1$ bis 1,3 dB μm$^4$/km (Gradientenindex-Multimode-Faser, $\Delta_{co} \approx 1,0\%$) bzw. $\alpha_R \approx 1,5$ bis 1,7 dB μm$^4$/km (Multimode-Faser mit hoher Apertur, $\Delta_{co} \approx 2,0\%$). $\Delta_{co}$ ist dabei der relative, maximale Brechungsindexunterschied zwischen Kern- und Mantelmaterial der Lichtleitfaser. Die Rayleigh-Streuverluste sind in diesem Materialsystem weitgehend unabhängig von den Ziehbedingungen, vom Herstellungsverfahren und ebenfalls von gegebenenfalls verwendeten, geringen Mengen an Codotierungen (wie z.B. $C_2F_6$); Resteinflüsse sind in den o.a. Daten bereits enthalten. Wellenlängenunabhängige optische Streuverluste (c-Terme) lassen sich bei optimierter Herstellungs- und Ziehprozeßführung in diesem Materialsystem für alle oben angeführten Fasertypen vernachlässigbar klein — d.h. typischerweise kleiner als 0,1 dB/km — halten.

Zu berücksichtigen ist somit hauptsächlich die reine materialintrinsische, in erster Näherung lineare Abhängigkeit des Rayleigh-Terms $\alpha_R$ von der Dotierungskonzentration. Bei der PCVD-Abscheidung führt dabei ein Anteil von 15 mol% $GeCl_4$ im totalen Chloridgasfluß zu einer relativen

Brechungsindexerhöhung $\Delta_{co}$ von etwa 1% und einem Rayleigh-Streuterm von etwa 1,1 bis 1,3 dB · μm⁴/km; die Extrapolation auf den Fall einer reinen SiO₂-Abscheidung liefert einen intrinsischen Rayleigh-Streuverlustterm von $\alpha_R(SiO_2) \approx 0{,}7$ bis 0,8 dB · μm⁴/km.

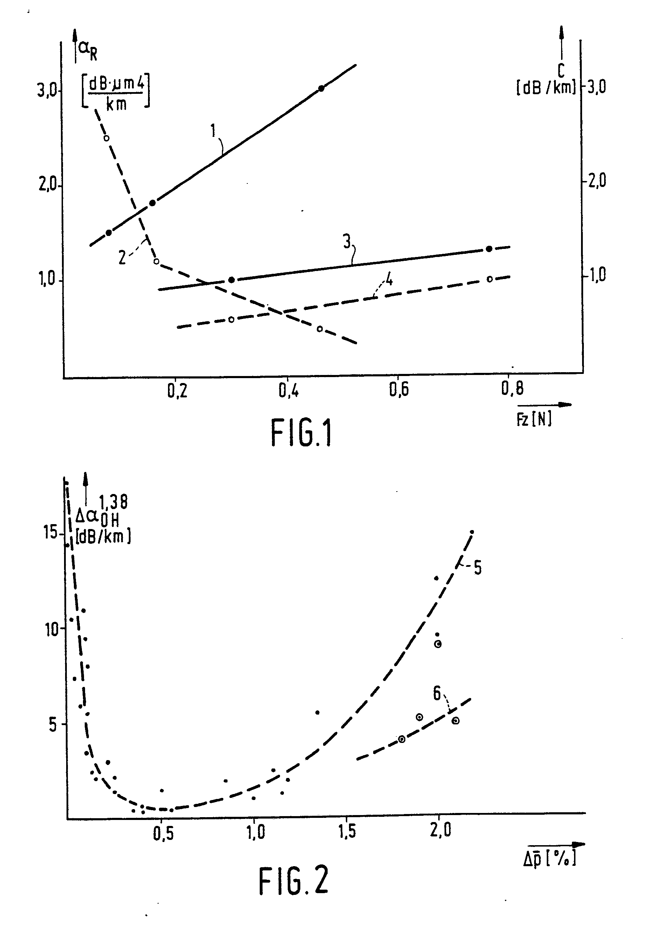

Zu erwarten war demzufolge, daß die ausschließliche Verwendung fluorhaltiger Verbindungen als Dotierungsmittel bei der PCVD-Abscheidung—wegen der Möglichkeit, im zentralen Leitungsbereich weitestgehend reines SiO₂ abzuscheiden—im Vergleich zum GeO₂/SiO₂-Materialsystem zu deutlich niedrigeren optischen Verlusten führen sollte. Wie Fig. 1 zeigt, konnte dieses Verhalten für rein fluordotierte Profilstrukturen jedoch auf experimenteller Basis nicht bestätigt werden: Im Vergleich zu den Daten für das GeO₂/SiO₂-System wurden für rein fluordotierte Lichtleitfasern deutlich höhere Werte für Rayleigh-Streuung $\alpha_R$ und c-Term gefunden, die außerdem eine ausgeprägte Abhängigkeit von der Ziehkraft $F_z$ (gemessen in Newton=N) aufweisen. Bei (gegenüber den optimalen Ziehbedingungen für das GeO₂/SiO₂-Materialsystem) unveränderten Ziehbedingungen betragen die entsprechenden optischen Daten für ein hochdotiertes F/SiO₂-Materialsystem etwa $\alpha_R \approx 2{,}5$ dB · μm⁴/km und c≈0,8 dB/km ($\Delta_{co} \approx 2\%$, vgl. Fig. 1, Kurve 1: Rayleigh-Streuung, Kurve 2: c-Term). Eine Optimierung des Ziehprozesses in Richtung auf eine gleichzeitige Verringerung beider Verlustterme ist entsprechend Fig. 1, Kurven 1 und 2, in diesem Materialsystem nicht möglich.

Setzt man jedoch bei der Abscheidung stark fluordotierten Materials der Gasphase geringe Mengen von GeCl₄ zu (GeO₂-Codotierung im SiO₂/F-System), werden überraschenderweise sowohl die Absolutwerte für Rayleigh- und c-Terme, als auch deren Abhängigkeit von der Ziehkraft deutlich reduziert; unter Standard-Ziehbedingungen betragen die entsprechenden Daten für das mit GeO₂ codotierte SiO₂/F-Materialsystem nur noch $\alpha_R \approx 1{,}0$ dB · μm⁴/km und c≈0,6 dB/km ($\Delta_{co}=2\%$; vgl. Fig. 1, Kurve 3: Rayleigh-Streuung, Kurve 4: c-Term). Die auch hier vorhandene geringe Restabhängigkeit beider optischer Verlustterme von den Ziehbedingungen läß jedoch entsprechend Fig. 1, Kurven 3 und 4 — im Gegensatz zum reinen SiO₂/F-System — eine weitere, erfolgreiche Optimierung der Ziehbedingungen durchaus zu. Insbesondere die Rayleigh-Streuterme liegen für das noch fluordotierte und gleichzeitig GeO₂-codotierte Materialsystem sehr deutlich unter denen der reinen SiO₂/F- und SiO₂/GeO₂-Dotierungssysteme; darüber hinaus werden in diesem Materialsystem—bei maximalen, relativen Brechungsindexdifferenzen zwischen Kern- und umgebendem Mantelmaterial von $\Delta_{co}=2\%$ — bereits Rayleigh-Streuverluste in der Nähe der für reines SiO₂ erwarteten Werte erreicht. Zur Erreichung dieser verbesserten optischen Daten genügen bei Anwendung der Erfindung relative Anteile von GeCl₄ in der Gasphase von typischerweise 1 bis 4 mol% (bezogen auf die totalen Chloridgasflüsse).

Es zeigte sich darüber hinaus, daß eine GeO₂-Codotierung überraschenderweise nicht nur die beschriebenen Verbesserungen bewirkt, sondern gleichzeitig den Einbau von OH-Verunreinigungen während der Abscheidung reduziert. Dieses günstige Verhalten ist insbesondere bei hohen Fluordotierungen — z.B. bei C₂F₆-Konzentrationen von ≲3 mol% im totalen Chloridgasstrom bzw. daraus resultierenden relativen Brechungsindexdifferenzen zwischen Kern- und umgebendem Mantelmaterial von $\Delta_p^- \gtrsim 1\%$ im abgeschiedenen Material — ausgeprägt vorhanden, wie Fig. 2 verdeutlicht: Eine Erhöhung der Indexdifferenzen $\Delta_p^-$ durch eine Steigerung der Fluor-Dotierungskonzentration (im vorliegenden Fall durch erhöhte C₂F₆-Zugabe) führt beim reinen SiO₂/F-Materialsystem für kleine Konzentrationen zunächst zu einer drastischen Verminderung des Gehalts von OH-Verunreinigungen (und damit der Zusatz-Absorptionsverluste $\Delta\alpha_{OH}$ (1,38 μm); bei Dotierungskonzentrationen oberhalb von etwa 2,5 mol% C₂F₆ ($\Delta_p^- \gtrsim 1\%$) steigt der Gehalt an OH-Verunreinigungen allerdings wieder deutlich an (s. Fig. 2, Kurve 5). Eine Zugabe geringer Mengen von GeCl₄ entsprechend dem erfindungsgemäßen Verfahren führt insbesondere in diesen Bereichen zu einer merklichen Reduktion des Gehalts an OH-Verunreinigungen um gut 50% (s. Fig. 2, Kurve 6); bezogen auf den Chloridgasfluß betrug dabei der GeCl₄-Anteil in der Gasphase wiederum etwa 2 bis 3 mol%.

Die erfindungsgemäße Codotierung verbessert demzufolge die optischen Eigenschaften fluordotierter Lichtleitfasern, insbesondere in bezug auf Reduzierung von negativen Zieheinflüssen, Verringerung der Beiträge von Rayleigh-Streuung, wellenlängenunabhängigen Streuverlusten und Zusatzabsorptionsverlusten durch OH-Verunreinigungen. Überraschenderweise wird außerdem die Rißbildung in den kollabierten Vorformen weitgehend unterdrückt. Die positive Wirkung ist zudem unabhängig von der speziellen Profilstruktur der hergestellten Lichtleitfasern, d.h. die optischen Eigenschaften werden bei der Herstellung von fluordotierten Multimode- und Monomode-Fasern gleichermaßen verbessert. Die Herstellung von Lichtleitfasern mit unterschiedlichen Profilstrukturen wird anhand einiger Ausführungsbeispiele verdeutlicht.

Beispiele 1 und 2: Gradientenindex-Multimode-Fasern

Es wurden hoch fluordotierte Gradientenindex-Multimode-Vorformen nach dem PCVD-Verfahren hergestellt, unter unterschiedlichen Ziehbedingungen zu Fasern ausgezogen und anschließend bezüglich ihrer optischen Verluste vermessen. Bis auf die relative Zusammensetzung der Gasphase wurden bei allen Experimenten die PCVD-Abscheidungsparameter konstant gehalten; die Ausführungsbeispiele unterscheiden sich lediglich dadurch, daß beim Beispiel 1 rein fluordotiertes SiO₂ abgeschieden wurde, wogegen beim Beispiel 2 der Gasphase geringe Mengen von GeCl₄ als reaktive Zusatzsubstanz zugegeben wurden. Die PCVD-Abscheidung erfolgte in beiden Fällen unter folgenden Versuchsbedingungen:

Verwendet wurden SiO$_2$-Substratrohre mit einem Innendurchmesser von 15 mm und einem Außendruchmesser von 18 mm, die über einer Länge von etwa 45 cm beschichtet wurden. Dabei betrug der Druck im Abscheidungsbereich etwa 20 hPa, die Substrattemperatur etwa 1200 bis 1250°C, die Mikrowellenleistung 750 Watt und die Hubgeschwindigkeit des Resonators über dem Substratrohr 8 m/min. Insgesamt wurden 2000 individuelle Lagen abgeschieden, was einer totalen Beschichtungsdauer von etwa 120 min entsprach.

Die Reaktionsgasflüsse Q wurden wie folgt vorgegeben: Während der gesamten Abscheidedauer blieben der Sauerstoff- und der SiCl$_4$-Fluß mit Q$_{O_2}$=800 cm$^3$/min bzw. Q$_{SiCl_4}$=100 cm$^3$/min konstant. Die Volumenangaben sind auf Normalbedingungen (0°C, 1000 hPa) bezogen. Zur Einstellung des gewünschten Gradientenindexprofils durch eine Fluordotierung wurde der entsprechende Fluß des fluorhaltigen, reaktiven Gases C$_2$F$_6$ während der Abscheidung des optischen Mantelbereichs mit Q$_{C_2F_6}$=15 cm$^3$/min über einen Zeitraum von etwa 60 min konstant gehalten und anschließend — bei der Abscheidung des optischen Kernbereichs — über weitere 60 min (~1000 Lagen) von 15 cm$^3$/min auf 0,8 cm$^3$/min reduziert. Die Variation von Q$_{C_2F_6}$ im Kernbereich wurde dabie so vorgenommen, daß in der endgültigen Vorform ein parabolisches Brechungsindexprofil mit einer maximalen, relativen Brechungsindexdifferenz von $\Delta_{co}$≈2% erzielt wurde. Unter den vorgegebenen Flußbedingungen betrug die maximale C$_2$F$_6$-Konzentration in der Chloridgasphase somit etwa 13 mol% und die mittlere Abscheiderate etwa 0,3 g/min.

Beispiel 1: Reine Fluordotierung (SiO$_2$/F-Materialsystem)

Die ohne Verwendung von GeO$_2$-Codotierung mit dem PCVD-Verfahren hergestellten Vorformen wurden mit unterschiedlichen Ziehbedingungen zu Fasern ausgezogen und optisch vermessen: Ein Ausziehen mit 10 m/min bei einer Ofentemperatur von 2100°C (Ziehkraft F$_Z$≈0,08 N) führte dabei zu Rayleigh-Streuverlusten von 1,5 dB·µm$^4$/km und c-Term-Verlusten von 2,5 dB/km; eine Ziehgeschwindigkeit von 20 m/min bei einer Ziehtemperatur von etwa 2000°C (Ziehkraft F$_Z$≈0,46 N) resultierte in einer Änderung der entsprechenden optischen Streuverlustterme auf Werte von 2,5 dB·µm$^4$/km bzw. 0,5 dB/km. Die Absorptionsverlustanteile durch OH-Verunreinigungen betrugen in beiden Fällen zwischen 10 bis 15 dB/km bei 1,38 µm.

Beispiel 2: Fluor-Dotierung mit GeO$_2$-Codotierung (SiO$_2$/F/GeO$_2$-Materialsystem)

Das Zufügen eines GeCl$_4$-Gasflußanteils von etwa 2,5 mol% im totalen Chloridgasfluß (Q$_{GeCl_4}$=3,0 cm$^3$/min) während der gesamten PCVD-Abscheidungszeit führte zu folgender Änderung der Streuverlustterme bei unterschiedlichen Ziehbedingungen: Bei 20 m/min Ziehgeschwindigkeit und einer Ziehtemperatur von 2050°C (Standard-Ziehbedingungen für das SiO$_2$/ GeO$_2$-Materialsystem; entsprechend Ziehkraft etwa 0,3 N) betrug der Rayleigh-Streuverlust 1,0 dB·µm$^4$/km und der c-Term-Verlust etwa 0,6 dB/km; bei 40 m/min und 2000°C Ziehtemperatur erhöhten sich diese Werte auf 1,2 dB·µm$^4$/km und 1,0 dB/km. Die zusätzlichen Absorptionsverluste durch OH-Verunreinigungen reduzieren sich in beiden Fällen auf Werte von 4 bis 5 dB/km bei 1,38 µm. Die GeO$_2$-Codotierung führte zu einer Reduktion der relativen, maximalen Brechungsindexdifferenz zwischen Kern und Mantel von 2% auf 1,8 bis 1,9%.

Beispiele 3 und 4: Monomode-Fasern

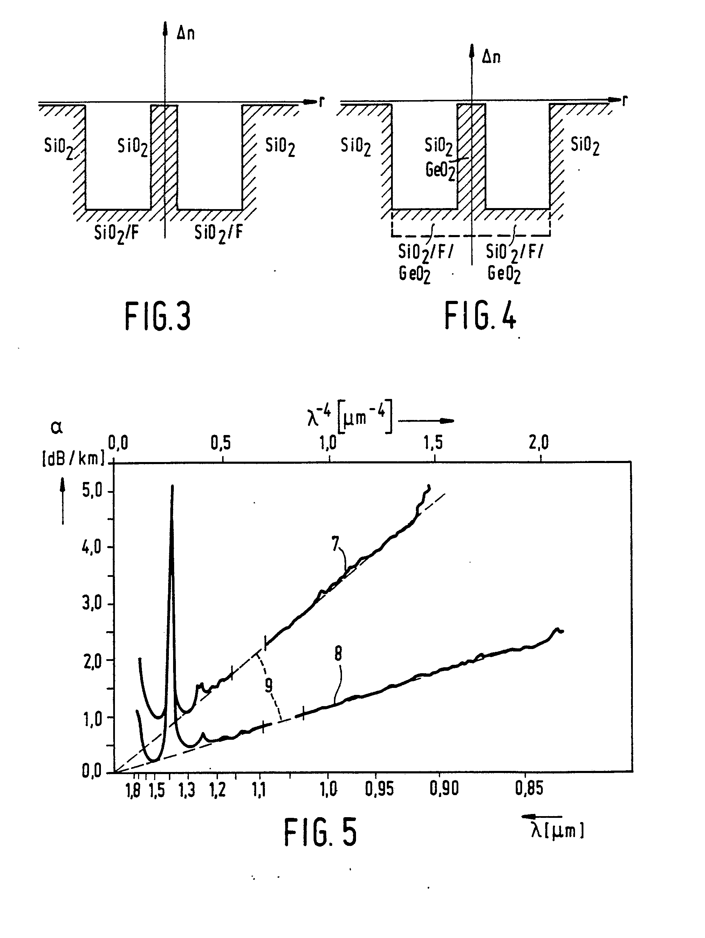

Unter den gleichen Abscheidebedingungen wie in den Beispielen 1 und 2 wurden Monomode-Fasern mit den in den Fig. 3 und 4 schematisch dargestellten Brechungsindexprofilen hergestellt.

Folgende Mischungsverhältnisse wurden beim Abscheideprozeß eingehalten:

Beispiel 3 (Fig. 3): Für die Kernzone wurden, bezogen auf SiCl$_4$, 0,35 mol% C$_2$F$_6$ zugesetzt. Für die Mantelzone wurden, bezogen auf SiCl$_4$, 1,72 mol% C$_2$F$_6$ zugesetzt.

Beispiel 4 (Fig. 4): Für die Kernzone wurden, bezogen auf SiCl$_4$, 0,35 mol% C$_2$F$_6$ und 2,65 mol% GeCl$_4$ zugesetzt. Für die Mantelzone wurden, bezogen auf SiCl$_4$, 1,25 mol% C$_2$F$_6$ und ebenfalls 2,65 mol% GeCl$_4$ zugegeben.

Die Brechungsindexprofile beider Faser-Vorformen sind weitgehend identisch. Aus beiden Vorformen wurden unter gleichen Bedingungen Fasern gezogen und bezüglich ihrer optischen Verluste charakterisiert. Die Faser nach Beispiel 3 zeigt einen hohen Rayleigh-Streuterm von 3,15 dB·µm$^4$/km, die nach dem erfindungsgemäßen Verfahren (Beispiel 4) hergestellte Faser, bei der das abgeschiedene Material durch das zudotierte GeO$_2$ einen höheren Ausdehnungskoeffizienten als der umgebende Mantel aufweist, hat dagegen einen niedrigen Rayleigh-Streuterm von 1,14 dB·µm$^4$/km.

Die zusätzlichen Absorptionsverluste durch OH-Verunreinigungen liegen in beiden Fällen mit etwa 4 dB/km bei 1,38 µm in gleicher Größenordnung. Dies zeigt Fig. 5, in der die Dämpfung α über der Wellenlänge λ bzw. (am oberen Rand) gegen λ$^{-4}$ aufgetragen ist. In der letztgenannten Darstellung kommt das (λ$^{-4}$)-Verhalten der Rayleigh-Streuung besonders gut zum Ausdruck. Kurve 7 zeigt das Dämpfungsspektrum der Faser nach Biespiel 3, Kurve 8 das der Faser nach Beispiel 4. Die Gebiete der jeweiligen Grenzwellenlängen sind mit 9 bezeichnet. Die Grenzwellenlänge ("cutoff wavelength") ist definiert als die Wellenlänge, oberhalb der nur noch die Grundmode LP01 geführt wird.

**Patentansprüche**

1. Lichtleitfaser auf der Basis von Siliziumdioxid mit einer deren Brechungsindexprofil zumindest im optischen Leitungsbereich bestimmenden Fluordotierung, gekennzeichnet durch einen Gehalt an mindestens einer den thermischen Ausdehnungskoeffizienten erhöhenden Substanz, die zumindest im optischen Leitungsbereich der Lichtleitfaser gleichmäßig verteilt ist.

2. Lichtleitfaser nach Anspruch 1, dadurch gekennzeichnet, daß sie als Substanz, die den thermischen Ausdehnungskoeffizienten erhöht, Germaniumdioxid enthält.

3. Lichtleitfaser nach Anspruch 1 oder 2, dadurch gekennzeichnet, daß der Gehalt an der den thermischen Ausdehnungskoeffizienten erhöhenden Substanz 0,3 bis 3,0 mol% beträgt.

4. Verfahren zur Herstellung der Lichtleitfaser nach Anspruch 1, 2 oder 3, wobei durch reaktive Abscheidung von Siliziumdioxid und Fluor als Dotierungsmittel aus einem Reaktionsgasgemisch eine Vorform erzeugt wird, die zur Lichtleitfaser weiterverarbeitet wird, dadurch gekennzeichnet, daß dem Reaktionsgasgemisch zumindest während der Abscheidung des optischen Leitungsbereichs eine gliechbleibende Menge mindestens einer reaktiven Zusatzsubstanz beigefügt wird, deren Reaktionsprodukt den thermischen Ausdehnungskoeffizienten des abgeschiedenen Materials erhöht.

5. Verfahren nach Anspruch 4, dadurch gekennzeichnet, daß der Gehalt an Zusatzsubstanz in der rekativen Gasphase so gewählt wird, daß die Konzentration des Reaktionsprodukts der Zusatzsubstanz im abgeschiedenen Material 0,5 bis 3,0 mol% beträgt.

6. Verfahren nach Anspruch 4 oder 5, dadurch gekennzeichnet, daß bei der reaktiven Abscheidung direkt kompakte Glasschichten ohne Sintern erzeugt werden.

**Revendications**

1. Fibre optique à base de dioxyde de silicium présentant un dopage de fluor qui détermine le profil d'indice de réfraction au moins dans la zone de conduction optique, caractérisée par une teneur en au moins une substance augmentant le coefficient de dilatation thermique qui est répartie uniformément au moins dans la zone de conduction optique de la fibre optique.

2. Fibre optique selon la revendication 1, caractérisée en ce qu'elle contient du dioxyde de germanium comme substance augmentant le coefficient de dilatation thermique.

3. Fibre optique selon la revendication 1 ou 2, caractérisée en ce que la teneur en substance augmentant le coefficient de dilatation thermique est de 0,3 à 3,0% en moles.

4. Procédé pour la fabrication de la fibre optique selon la revendication 1, 2 ou 3, selon lequel une préforme est réalisée par dépôt réactif de dioxyde de silicium et de fluor comme agent de dopage à partir d'un mélange de gaz de réaction et est transformée davantage en une fibre optique, caractérisé en ce qu'au moins pendant le dépôt de la zone de conduction optique, le mélange de gaz de réaction est additionné d'une quantité constante d'au moins une substance d'addition réactive dont le produit de réaction augmente le coefficient de dilatation thermique du matériau déposé.

5. Procédé selon la revendication 4, caractérisé en ce que la teneur en substance d'addition dans la phase gazeuse réactive est choisie de façon que la concentration du produit de réaction de la substance d'addition dans le matériau déposé soit de 0,5 à 3,0% en moles.

6. Procédé selon la revendication 4 ou 5, caractérisé en ce que des couches en verre compactes sont obtenues de façon directe sans frittage pendant le dépôt réactif.

**Claims**

1. Optical fibre based on silicon dioxide with fluorine doping that determines its refractive index profile at least in the light transmitting region, characterized by a quantity of at least one substance which increases the thermal expansion coefficient and which is uniformly distributed at least in the light transmitting region of the optical fibre.

2. Optical fibre as claimed in Claim 1, characterized in that it contains germanium dioxide as the substance which increases the thermal expansion coefficient.

3. Optical fibre as claimed in Claims 1 or 2, characterized in that the quantity of the substance increasing the thermal expansion coefficient is 0.3 to 3.0 mol%.

4. Method of manufacturing optical fibres as claimed in Claims 1, 2 or 3, in which a preform is produced by reactive deposition of silicon dioxide and fluorine as dopants from a reactive gas mixture, said preform being further processed into optical fibres, characterized in that a constant quantity of at least one reactive additive, the reaction product of which increases the thermal expansion coefficient of the deposited material, is added to the reactive gas mixture, at least during the deposition of the light transmitting region.

5. Method as claimed in Claim 4, characterized in that the quantity of additive in the reactive gas phase is chosen so that the concentration of the reaction product of the additive in the deposited material amounts to 0.5 to 3.0 mol%.

6. Method as claimed in Claim 4 or 5, characterized in that in the reactive deposition process compact glass layers are directly produced without sintering.

FIG.1

FIG.2

FIG.3

FIG.4

FIG.5